# EUROPÄISCHE PATENTANMELDUNG

(11) **EP 2 523 119 A1**
(43) Veröffentlichungstag der Anmeldung: **14.11.2012**
(21) Anmeldenummer: 11165972.8
(22) Anmeldetag: 13.05.2011
(51) Int. Cl.: G06F 13/42, H04L 25/49

(54) **Verfahren zur seriellen Datenübertragung**

(71) Anmelder: SIEMENS AKTIENGESELLSCHAFT, 80333 München (DE)
(72) Erfinder: Jänicke, Peter, 91058, Erlangen (DE)

(57) **Zusammenfassung**

Die Erfindung betrifft ein Verfahren zur seriellen Übertragung von Daten zwischen mindestens einem Sender und mindestens einem Empfänger, wobei die Datenübertragung in Form von Telegrammen (32) und mit Symbolen (34) erfolgt, indem auf Seiten des Senders ein Datum in ein Symbol (34) und auf Seiten des Empfängers das Symbol (34) in ein Datum (36) umgesetzt wird, wobei zur Kennzeichnung eines Telegramms (32) spezielle Symbole (34) verwendet werden und wobei in Telegrammpausen ein eine Pause kodierendes Symbol (38,40,42) übertragen wird, das sich dadurch auszeichnet, dass zur Übertragung von Daten während der Telegrammpausen zumindest ein erstes und ein zweites eine Pause kodierendes Symbol - erstes und zweites Pausensymbol (40,42) - übertragen wird und dass aus einer Folge von Pausensymbolen (40,42) eine Information abgeleitet wird.

## Beschreibung

Die Erfindung betrifft ein Verfahren zur seriellen Übertragung von Daten zwischen mindestens einem Sender und mindestens einem Empfänger gemäß dem Oberbegriff des Anspruchs 1.

Serielle Datenübertragungsverfahren sind an sich bekannt. Häufig besteht allerdings die Notwendigkeit neben den übertragenen Daten, die zur Unterscheidung im Folgenden auch als Nutzdaten bezeichnet werden, weitere Daten übertragen zu können. Solche weiteren Daten werden in der Fachterminologie und hier zur Unterscheidung als Seitenbanddaten bezeichnet. Die Seitenbanddaten können für Diagnosezwecke, zur Kodierung einer Qualität der kommunikativen Verbindung, usw. verwendet werden.

Zur Übertragung von Seitenbanddaten sind bisher zwei Ansätze verfolgt worden. Zum einen werden separate Schnittstellen oder Schnittstellen mit zusätzlichen Leitungen verwendet. Dies erhöht allerdings in nachteiliger Weise die Kosten einer kommunikativen Verbindung zwischen zwei oder mehreren Kommunikationsteilnehmern. Zum anderen ist noch erwogen worden, die Seitenbanddaten in bei der Datenübertragung zwischen zwei Kommunikationsteilnehmern übermittelte und normalerweise nur Nutzdaten enthaltende Telegramme zu verpacken oder an solche Telegramme anzuhängen. Dafür muss allerdings die Definition der Nutzdatentelegramme geändert oder erweitert werden. Zudem setzt die Übertragung von Seitenbanddaten in Nutzdatentelegrammen voraus, dass die Übermittlung von Nutzdatentelegrammen funktioniert. Dies kann aber z.B. bei der Übertragung von Diagnoseinformationen in den Seitenbanddaten ein erheblicher Nachteil sein. Zudem reduziert ein Anhängen von Seitenbanddaten an ein Nutzdatentelegramm die in einer Zeiteinheit übertragbare Nutzdatenmenge.

Eine Aufgabe der vorliegenden Erfindung besteht darin, ein weiteres Verfahren zur Übertragung von Seitenbanddaten anzugeben, insbesondere ein Verfahren, das die oben genannten Nachteile vermeidet oder zumindest reduziert.

Diese Aufgabe wird erfindungsgemäß mit den Merkmalen des Anspruchs 1 gelöst. Dazu ist bei einem Verfahren zur seriellen Übertragung von Daten zwischen mindestens einem als Sender fungierenden Kommunikationsteilnehmer und mindestens einem als Empfänger fungierenden Kommunikationsteilnehmer, wobei die Datenübertragung in Form von Telegrammen und mit Symbolen erfolgt, indem auf Seiten des Senders ein Datum in ein Symbol und auf Seiten des Empfängers das Symbol in ein Datum umgesetzt wird, wobei zur Kennzeichnung eines Telegramms spezielle Symbole verwendet werden und wobei in Telegramm- oder Übertragungspausen ein eine Pause kodierendes Symbol (Pausensymbol) übertragen wird, vorgesehen, dass zur Übertragung von Daten, nämlich Seitenbanddaten, während der Pausen zumindest ein erstes und ein zweites Pausensymbol übertragen wird und dass aus einer Folge von Pausensymbolen eine Information abgeleitet wird.

Die empfangenen Seitenbanddaten sind die abgeleitete Information oder gehen auf die abgeleitete Information zurück. Auf Senderseite werden die zu übermittelnden Seitenbanddaten durch Pausensymbole kodiert. Dazu wird eine Definition der für die serielle Datenübertragung vorgesehenen Symbole erweitert. Moderne serielle Datenübertragungsprotokolle senden in Übertragungs-, Telegramm- oder Sendepausen - zusammenfassend als Pause oder Übertragungspause bezeichnet - ein zur Kennzeichnung solcher Pausen und zur Synchronisierung der Kommunikationsteilnehmer vorgesehenes Pausensymbol, das in der Fachterminologie auch als Idle-Symbol bezeichnet wird. Der hier vorgeschlagene Ansatz sieht vor, dass anstelle des bisherigen einzelnen Pausensymbols zumindest ein erstes und ein zweites Pausensymbol verwendet wird. Hinsichtlich der Kennzeichnung einer Übertragungspause und/oder zur Synchronisation werden alle Pausensymbole, also zumindest das erste und zweite Pausensymbol, durch das serielle Datenübertragungsprotokoll wie das bisherige, einzige Pausensymbol ausgewertet. Für die Übertragung von Seitenbanddaten werden diese durch eine Folge der Pausensymbole kodiert. Die Pausensymbole oder auch ein Übergang zwischen Pausensymbolen erhalten also jetzt einen Informationsgehalt.

Der Vorteil der Erfindung besteht darin, dass zur Übermittlung der Seitenbanddaten Symbole verwendet werden, die bei modernen seriellen Datenübertragungsprotokollen ohnehin in den Übertragungspausen gesendet werden, so dass die Übertragung der Seitenbanddaten mit dem hier vorgeschlagenen Ansatz ohne Bandbreitenverlust möglich ist. Zudem können die Seitenbanddaten ohne physikalische Modifikation der Schnittstelle, etwa zusätzliche Leitungen oder dergleichen, übertragen werden, so dass der hier vorgeschlagene Ansatz kostengünstig und auch für bestehende Kommunikationssysteme ohne Weiteres verwendbar ist.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Hinsichtlich der Ableitung einer Information aus einer Folge von Pausensymbolen kommt in Betracht, dass jedem Pausensymbol ein Statuswert, bei zwei Pausensymbolen also z.B. "0" oder "1", "high" oder "low", zugewiesen ist und sich die Information aus der Folge der resultierenden Statuswerte ergibt. Alternativ kommt in Betracht, dass einem Übergang zwischen einem Pausensymbol und einem anderen Pausensymbol, insbesondere einem Übergang zwischen dem ersten und dem zweiten Pausensymbol und dem zweiten und dem ersten Pausensymbol, jeweils ein Statuswert zugewiesen, also z.B. "0" oder "1", "high" oder "low", ist und sich die Information wieder aus der Folge der resultierenden Statuswerte ergibt. Wenn auch ein Übergang von einem Pausensymbol auf ein nächstes, gleiches Pausensymbol erkannt wird, ergeben sich mit zwei Pausensymbolen vier mögliche Übergänge, denen jeweils ein eigener Statuswert zugewiesen werden kann, also z.B. "00", "01", "10" und "11".

Anstelle von zwei Pausensymbolen können auch mehr als zwei Pausensymbole verwendet werden. Bei vier Pausensymbolen, kommt z.B. in Betracht, den sich dann ergebenden ersten, zweiten, dritten und vierten Pausensymbolen, in binärer Schreibweise die folgenden Statuswerte zuzuordnen: "00", "01", "10" und ",11". Wenn der Statuswert durch den Übergang zwischen zwei Pausensymbolen kodiert ist, ergeben sich bei vier Pausensymbolen schon sechzehn mögliche Übergänge und damit sechzehn verschiedene Statuswerte. Wenn nur Übergänge zwischen verschiedenen Pausensymbolen einen zulässigen Statuswert kodieren sollen, ergeben sich bei vier Pausensymbolen immer noch zwölf verschiedene Statuswerte.

Hinsichtlich der Umsetzung jeweils eines Symbols in ein Datum kommt eine sogenannte 4B/5B Kodierung in Betracht. Die 4B/5B Kodierung ist eine weitgehend gleichstromfreie Kodierung. Daneben ist auch sichergestellt, dass genügend Flankenwechsel im Signal vorhanden sind um eine Taktrückgewinnung zu ermöglichen. Alternativ kommt zur Umsetzung jeweils eines Symbols in ein Datum auch eine sogenannte 8B/10B Kodierung oder allgemeine jede mit Symbolen arbeitende Kodierung in Betracht, wobei die 8B/10B Kodierung neben den Eigenschaften der 4B/5B Kodierung noch die Eigenschaft hat, gleichstromfrei zu sein. Die 8B/10B Kodierung ist weit verbreitet und kommt z.B. bei USB2.0, USB3.0, Firewire800; PCIe 1.x und 2.x, DVI, usw. zum Einsatz. Weitere mit Symbolen arbeitende und damit in Frage kommende Kodierverfahren sind insbesondere 64b66b (lOGbit-Ethernet), 128b/130b (PCIe 3.0) und Eight-to-Fourteen (Compact Disc).

Die oben genannte Aufgabe wird auch mit einem Automatisierungsgerät als Teilnehmer in einem Kommunikationssystem zumindest zweier über eine serielle Verbindung kommunikativ verbundener Automatisierungsgeräte gelöst, indem das Automatisierungsgerät Mittel zur Ausführung des Verfahrens und ggf. seiner Ausführungsformen wie hier und nachfolgend beschrieben aufweist und damit geeignet ist in einem solchen Verfahren als Sender oder Empfänger zu fungieren. Das Verfahren ist dabei bevorzugt in Software oder in Software und Firmware implementiert. Die Erfindung ist damit einerseits auch ein Computerprogramm mit durch einen Computer ausführbaren Programmcodeanweisungen zur Implementierung des Verfahrens und andererseits ein Speichermedium mit einem derartigen Computerprogramm sowie schließlich auch ein Automatisierungsgerät, in dessen Speicher oder in dessen dafür vorgesehene Hardware, z.B. in Form eines ASICs, als Mittel zur Durchführung des Verfahrens und seiner Ausgestaltungen ein solches Computerprogramm geladen oder ladbar ist. Das Verfahren kann auch in Hardware implementiert sein, z.B. in Form eines um eine Funktionalität entsprechend dem hier vorgeschlagenen Verfahren erweiterten Schnittstellenbausteins für eine serielle Verbindung. Die Erfindung ist damit auch ein solcher Schnittstellenbaustein oder ein Automatisierungsgerät mit einem solchen Schnittstellenbaustein. Als Automatisierungsgerät kommt eine Steuerung, z.B. eine speicherprogrammierbare Steuerung oder ein dezentrales Peripheriegerät, ein Sensor oder ein Aktor, eine Antriebssteuerungseinrichtung, usw. in Betracht. Demnach soll der Begriff Automatisierungsgerät sämtliche Geräte, Einrichtungen oder Systeme umfassen, also neben z.B. Steuerungen, wie speicherprogrammierbaren Steuerungen, Prozessrechnern, (Industrie-)Computern und dergleichen auch Antriebssteuerungen, Frequenzumrichter und Ähnliches, wie sie zur Steuerung, Regelung und/oder Überwachung technologischer Prozesse z.B. zum Umformen oder Transportieren von Material, Energie oder Information etc. eingesetzt werden oder einsetzbar sind, wobei insbesondere über geeignete technische Einrichtungen, wie z.B. Sensoren oder Aktoren, Energie aufgewandt oder gewandelt wird.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: ein Automatisierungssystem in dem zumindest einzelne Automatisierungsgerät durch eine serielle Verbindung kommunikativ gekoppelt sind,
- FIG 2: einen Ausschnitt aus einer Datenübertragung über eine serielle Verbindung zwischen einem Sender und einem Empfänger mit einem Telegrammausschnitt und einem nach einer Übertragungspause folgenden weiteren Telegramm,
- FIG 3: einen Ausschnitt gemäß FIG 2, wobei zur Übertragung von Daten während der Telegrammpause und ggf. weiteren Telegrammpausen zumindest ein erstes und ein zweites eine Pause kodierendes Symbol übertragen wird und wobei einer Folge von derartigen Pausensymbolen eine Information abgeleitet wird und

- FIG 4: einen über eine serielle Verbindung kommunikativ verbundenen Sender und Empfänger mit jeweils einem Kommunikationsbaustein als möglichem Ort zur Implementierung des hier vorgeschlagenen Verfahrens.

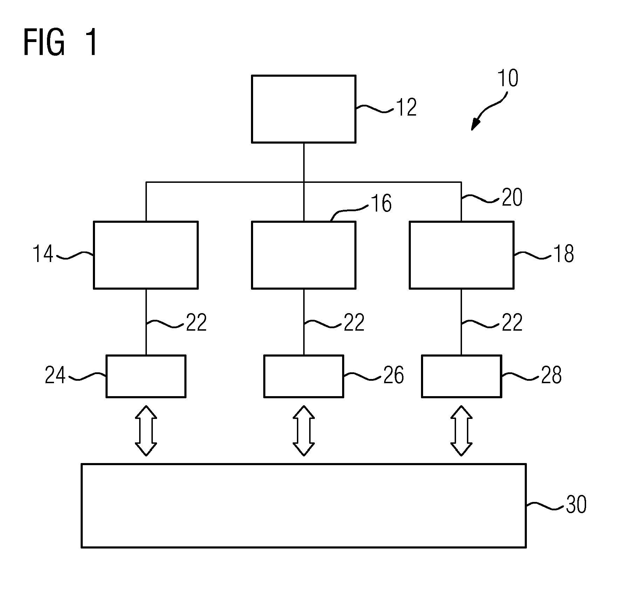

FIG 1 zeigt schematisch vereinfacht ein Automatisierungssystem 10 mit einer Mehrzahl von Automatisierungsgeräten 12, 14, 16, 18, von denen z.B. eines als übergeordnete Einheit 12 fungiert. Bei den Automatisierungsgeräten 12, 14, 16, 18 kann es sich um speicherprogrammierbare Steuerungen, dezentrale Peripheriegeräte, Antriebssteuerungsgeräte, usw. handeln. Die Automatisierungsgeräte sind in an sich bekannter Art und Weise kommunikativ verbunden, z.B. über einen Bus, insbesondere einen Feldbus 20.

Mit einzelnen Automatisierungsgeräten 14, 16, 18 sind über eine serielle Verbindung 22 weitere Automatisierungsgeräte 24, 26, 28 verbunden, wobei grundsätzlich auch ein Feldbus 20 als serielle Verbindung mit einer seriellen Datenübertragung ausgeführt sein kann. Die dargestellte serielle Verbindung 22 soll demnach ausdrücklich nur als Beispiel für eine mögliche serielle Verbindung in einem Automatisierungssystem 10 dienen. Bei den weiteren Automatisierungsgeräten handelt es sich bei der in FIG 1 gezeigten Konfiguration zum Beispiel um sogenannte intelligente Sensoren oder Aktoren, die über die serielle Verbindung 22 Daten austauschen. Das Automatisierungssystem 10 ist insgesamt zur Steuerung und/oder Überwachung eines nicht näher darstellten industriellen technischen Prozesses 30 vorgesehen, indem z.B. Sensoren Daten aus dem technischen Prozess 30 aufnehmen, zur Verarbeitung an eines der Automatisierungsgeräte 12-18 weiterleiten, wo anhand eines so aufgenommenen Zustands des technischen Prozesses 30 Steuerbefehle für den technischen Prozess 30 ermittelt werden, die zur Beeinflussung des technischen Prozesses 30 an Aktoren übermittelt werden.

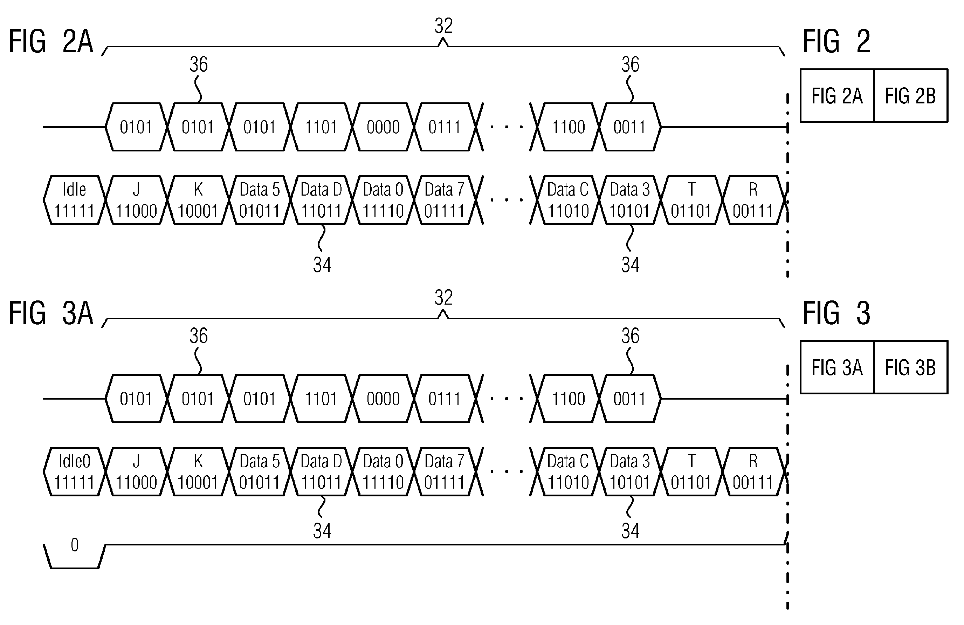

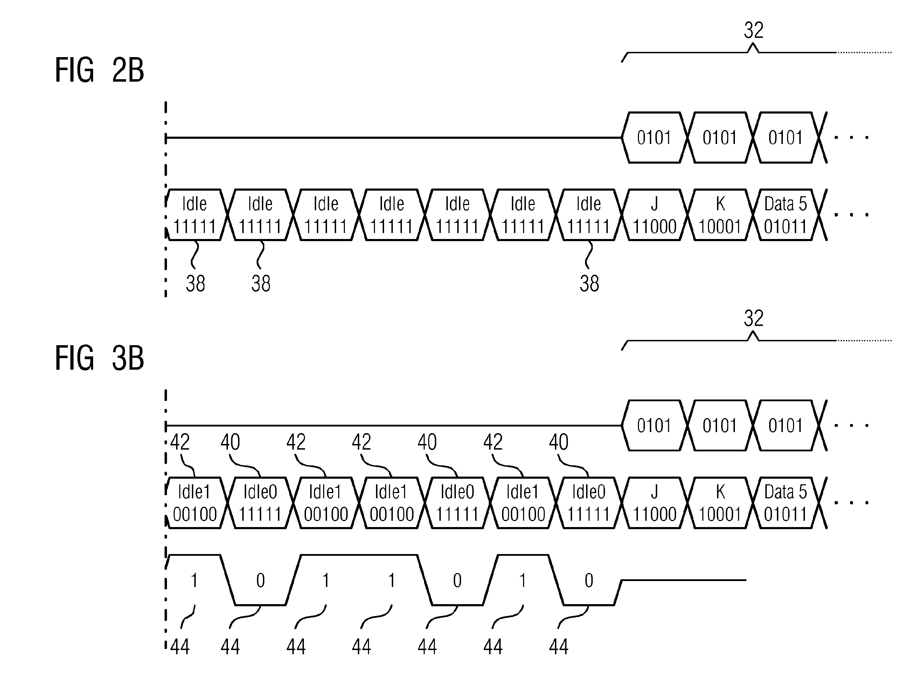

FIG 2 zeigt einen Ausschnitt aus einem Telegramm 32 bei einer Datenübertragung über eine serielle Verbindung 22 (FIG 1) und zwar am Beispiel einer sogenannten 4B/5B Kodierung. Bei einer solchen oder ähnlichen Kodierung werden Symbole 34 übertragen und die übertragenen Symbole 34 in jeweils ein Datum 36 umgesetzt. Um die Übersicht in der Darstellung nicht unnötig zu erschweren, sind nur einzelne Symbole 34 und Daten 36 mit dem Bezugszeichen bezeichnet. Bei der dargestellten 4B/5B Kodierung umfasst jedes Symbol 34 fünf Bit und jedes Datum 36 vier Bit; man spricht auch von vier Nutzdatenbits und fünf Codebits. Im Anhang ist in Tabelle 1 die 4B/5B Kodierung mit weiteren Symbolen 34 und dem jeweils zugehörigen Datum 36 gezeigt. Spezielle Symbole 34 kennzeichnen ein Telegramm 32, nämlich dessen Anfang und dessen Ende.

Beim Senden erzeugt ein Sender, nämlich z.B. eines der Automatisierungsgeräte 14-18 einen Telegrammrahmen mit den speziellen Symbolen 34 "J" und "K" zur Kennzeichnung des Telegrammbeginns und später den speziellen Symbolen 34 "T" und "R" zu Kennzeichnung des Telegrammendes und dazwischen als Nutzdaten des Telegramms 32 für jedes zu übermittelnde Datum 36 das zugehörige Symbol 34 (Nutzdatensymbol). Ein Empfänger eines solchen Telegramms 32 erkennt den Beginn und das Ende des Telegramms 32 an den speziellen Symbolen 34, nämlich "J" und "K" bzw. "T" und "R", und wandelt die vom Telegramm 32 umfassten Symbole 34 (Nutzdatensymbole) jeweils in ein Datum 36 um. Zwischen zwei Telegrammen 32 werden spezielle, eine Pause (Übertragungspause) kodierende Symbole 36, die im Folgenden als Pausensymbole 38 bezeichnet werden, übertragen. Üblich ist die Übertragung mehrerer Pausensymbole 38 in einer Sende- oder Übertragungspause. Bei der Fast-Ethernet Norm IEEE802.3 ist z.B. eine Anzahl von zweiundzwanzig Pausensymbolen 38 zwischen zwei Telegrammen 32 festgelegt. Wie bei den Symbolen 34 und dem jeweils zugehörigen Datum 36 sind in FIG 2 mit Rücksicht auf die Übersichtlichkeit nur einzelne Pausensymbole 38 mit der Bezugsziffer bezeichnet. Ein Pausensymbol 38 wird in der Fachterminologie auch als Idle-Symbol oder kurz als Idle bezeichnet. Diese Bezeichnung ist als Bedeutung des Symbols in der Zeichnung dargestellt.

FIG 3 zeigt im Wesentlichen die Situation wie in FIG 2. Zusätzlich ist noch gezeigt, dass zur Übertragung von Daten während der Telegrammpausen zumindest ein erstes und ein zweites eine Pause kodierendes Symbol - erstes und zweites Pausensymbol 40, 42 - übertragen wird und dass aus einer Folge von Pausensymbolen 40, 42 eine Information abgeleitet wird. Tabelle 2 im Anhang zeigt dazu die erweitere 4B/5B Kodierung, wobei grundsätzlich auch jede andere Kodierung, also zum Beispiel 8B/10B in Betracht kommt. Die aus der Folge von Pausensymbolen 40, 42 abgeleiten Information werden hier als Seitenbanddaten 44 bezeichnet, weil sie in Übertragungspausen, also in Zeiträumen, in denen keine Nutzdaten übertragen werden, übermittelt werden. Anstelle der in FIG 3 zur Erläuterung des Prinzips des hier vorgeschlagenen Ansatzes dargestellten Situation, bei der ein Pausensymbol 40, 42 unmittelbar in ein Seitenbanddatum 44 umgesetzt wird, zum Beispiel ein erstes Pausensymbol 40 in eine logische "0" als Seitenbanddatum 44 und ein zweites Pausensymbol 42 in eine logische "1" als weiteres Seitenbanddatum 44, kommt auch in Betracht, dass Übergänge zwischen Pausensymbolen 40, 42 ein Seitenbanddatum kodieren.

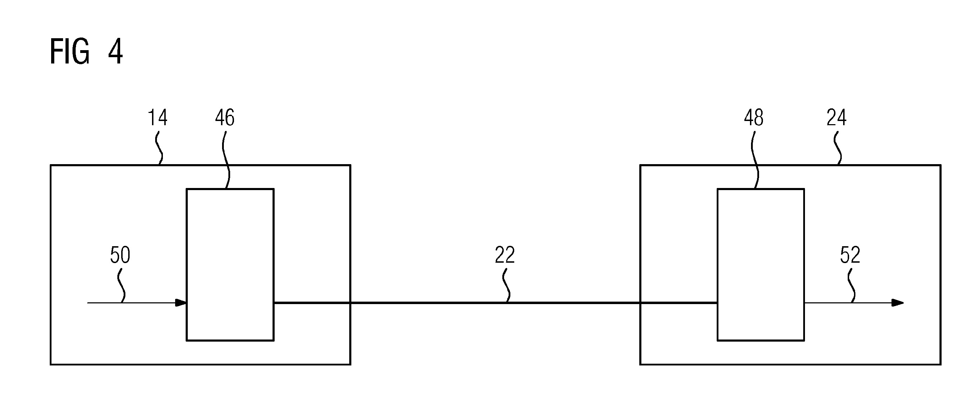

FIG 4 zeigt abschließend auf der linken Seite ein Automatisierungsgerät 12-18, 24-28 (FIG 1) als Sender und auf der rechten Seite ein Automatisierungsgerät 12-18, 24-28 als Empfänger bei einer seriellen Datenübertragung über eine serielle Verbindung 22. Jedes Automatisierungsgerät 12-18, 24-28 kann dabei - je nach Kommunikationsrichtung - sowohl als Sender wie auch als Empfänger fungieren. Als Sender und Empfänger kommen über die hier erwähnten Automatisierungsgeräte hinaus auch grundsätzlich andere elektrische oder elektronische Geräte in Betracht, bei denen eine serielle Vernetzung vorgesehen oder sinnvoll ist, z.B. Geräte, wie sie bei der Büroautomatisierung Verwendung finden oder Geräte oder Funktionseinheiten in einem Fahrzeug, Flugzeug, usw. Als serielle Verbindung 22 im Sinne der hier verwendeten Terminologie gelten auch moderne Verbindungen wie Ethernet, USB, Firewire, CAN-Bus, RS-485, usw., auch wenn diese üblicherweise nicht primär als serielle Verbindungen oder serielle Schnittstellen bezeichnet werden.

Zur Umsetzung des Verfahrens weist jedes an eine serielle Verbindung 22 angeschlossene Gerät jeweils einen Schnittstellenbaustein 46, 48 oder integriert in eine andere Funktionseinheit, insbesondere einen Halbleiterbaustein, die Funktionalität eines solchen Schnittstellenbausteins 46, 48 auf. Ein Beispiel für einen derartigen Schnittstellenbaustein 46, 48 ist der unter der Bezeichnung UART bekannte Schnittstellenbaustein. Ein solcher Schnittstellenbaustein 46, 48 ist ein möglicher Ort zur Implementierung des Verfahrens, nämlich zur Übertragung von Daten, wobei während der Telegrammpausen zumindest ein erstes und ein zweites eine Pause kodierendes Symbol 40, 42 übertragen wird, und zur Ableitung einer Information aus einer Folge solcher Pausensymbole 40, 42. Die Generierung und Übertragung der Pausensymbole 40, 42 entsprechend der als Seitenbanddaten 44 zu übermittelnden Informationen, z.B. Diagnoseinformationen, erfolgt dabei auf Seiten des jeweiligen Senders. Die Ableitung einer Information aus einer Folge solcher Pausensymbole 40, 42, also eine mittelbare oder unmittelbare Ableitung der jeweiligen Seitenbanddaten 44, erfolgt auf Seiten des jeweiligen Empfängers. Der jeweilige Schnittstellenbaustein 46 des Senders erhält dazu Eingangssignale 50 hinsichtlich der als Seitenbanddaten 44 zu übermittelnden Informationen und der jeweilige Schnittstellenbaustein 48 des Empfängers stellt die erhaltenen Seitenbanddaten 44 als Ausgangssignale 52 zur Verfügung. Nicht dargestellt ist dabei, dass der jeweilige Schnittstellenbaustein 46, 48 auf Senderseite auch Eingangssignale hinsichtlich der zu übermittelnden Nutzdaten erhält und auf Empfängerseite anhand der erhaltenen Nutzdaten diesbezügliche Ausgangssignale generiert.

Ein Schnittstellenbaustein 46, 48 wie in FIG 4 dargestellt ist ein Beispiel für Mittel zur Ausführung des hier vorgeschlagenen Verfahrens und ggf. einzelner Ausführungsformen, nämlich zum Übertragen zumindest eines ersten und zweiten Pausensymbols 40, 42 während Telegrammpausen und zum Ableiten einer Information aus einer Folge von Pausensymbolen 40, 42. Insofern das Verfahren in Software implementiert ist, ist in nicht dargestellter aber an sich bekannter Art und Weise ein Computerprogramm mit Programmcodeanweisungen das Mittel zur Ausführung des Verfahrens, wobei das Computerprogramm in eine Verarbeitungseinheit nach Art eines Mikroprozessors ladbar ist, der die Funktionalität eines Schnittstellenbausteines 46, 48 bereitstellt. Insofern das Verfahren in Software und Firmware oder nur in Firmware implementiert ist, zum Beispiel im Falle eines ASICs, FPGAs, usw. zur Realisierung der Funktionalität des Schnittstellenbausteins 46, 48, meint der Begriff Computerprogramm auch eine in einer Hardwarebeschreibungssprache ausgedrückte Funktionalität der Firmware, die zwecks Konfiguration des Schnittstellenbausteins 46, 48 in diesen übertragen wird.

Einzelne Aspekte der hier vorgelegten Beschreibung lassen sich damit kurz wie folgt zusammenfassen: Es wird ein Verfahren zur seriellen Übertragung von Daten zwischen mindestens einem Sender und mindestens einem Empfänger angegeben, wobei die Datenübertragung in Form von Telegrammen 32 und mit Symbolen 34 erfolgt, indem auf Seiten des Senders ein Datum 36 in ein Symbol 34 und auf Seiten des Empfängers das Symbol 34 in ein Datum 36 umgesetzt wird, wobei zur Kennzeichnung eines Telegramms 32 spezielle Symbole 34 verwendet werden und wobei in Telegrammpausen ein eine Pause kodierendes Symbol 38, 40, 42 übertragen wird, wobei sich das Verfahren insbesondere dadurch auszeichnet, dass zur Übertragung von Daten während der Telegrammpausen zumindest ein erstes und ein zweites eine Pause kodierendes Symbol - erstes und zweites Pausensymbol 40, 42 - übertragen wird und dass aus einer Folge von Pausensymbolen 40, 42 eine Information abgeleitet wird.

**Tabelle 1:**

| Codegruppe | Datum | Interpretation |
|---|---|---|
| 11110 | 0000 | Data0 |
| 01001 | 0001 | Data1 |
| 10100 | 0010 | Data2 |
| 10101 | 0011 | Data3 |
| 01010 | 0100 | Data4 |
| 01011 | 0101 | Data5 |
| 01110 | 0110 | Data6 |
| 01111 | 0111 | Data7 |
| 10010 | 1000 | Data8 |
| 10011 | 1001 | Data9 |
| 10110 | 1010 | DataA |
| 10111 | 1011 | DataB |
| 11010 | 1100 | DataC |
| 11011 | 1101 | DataD |
| 11100 | 1110 | DataE |
| 11101 | 1111 | DataF |
| 11111 | ./. | Idle (Pausensymbol) |
| 11000 | ./. | J |
| 10001 | ./. | K |
| 01101 | ./. | T |
| 00111 | ./. | R |
| 00000 | | nicht verwendet |
| 00001 | | nicht verwendet |
| 00010 | | nicht verwendet |
| 00011 | | nicht verwendet |
| 00100 | | nicht verwendet |
| 00101 | | nicht verwendet |
| 00110 | | nicht verwendet |
| 01000 | | nicht verwendet |
| 01100 | | nicht verwendet |
| 10000 | | nicht verwendet |
| 11001 | | nicht verwendet |

**Tabelle 2:**

| Codegruppe | Datum | Interpretation |
|---|---|---|
| 11110 | 0000 | Data0 |
| 01001 | 0001 | Data1 |
| 10100 | 0010 | Data2 |
| 10101 | 0011 | Data3 |
| 01010 | 0100 | Data4 |
| 01011 | 0101 | Data5 |
| 01110 | 0110 | Data6 |
| 01111 | 0111 | Data7 |
| 10010 | 1000 | Data8 |
| 10011 | 1001 | Data9 |
| 10110 | 1010 | DataA |
| 10111 | 1011 | DataB |
| 11010 | 1100 | DataC |
| 11011 | 1101 | DataD |
| 11100 | 1110 | DataE |
| 11101 | 1111 | DataF |
| 11111 | ./. | Idle 1 (erstesPausensymbol) |
| 11000 | ./. | J |
| 10001 | ./. | K |
| 01101 | ./. | T |
| 00111 | ./. | R |
| 00100 | | Idle 2 (zweitesPausensymbol) |
| 00000 | | nicht verwendet |
| 00001 | | nicht verwendet |
| 00010 | | nicht verwendet |
| 00011 | | nicht verwendet |
| 00101 | | nicht verwendet |
| 00110 | | nicht verwendet |
| 01000 | | nicht verwendet |
| 01100 | | nicht verwendet |
| 10000 | | nicht verwendet |
| 11001 | | nicht verwendet |

## Patentansprüche

1. Verfahren zur seriellen Übertragung von Daten zwischen mindestens einem Sender und mindestens einem Empfänger, wobei die Datenübertragung in Form von Telegrammen (32) und mit Symbolen (34) erfolgt, indem auf Seiten des Senders ein Datum in ein Symbol (34) und auf Seiten des Empfängers das Symbol (34) in ein Datum (36) umgesetzt wird, wobei zur Kennzeichnung eines Telegramms (32) spezielle Symbole (34) verwendet werden und wobei in Telegrammpausen ein eine Pause kodierendes Symbol (38,40,42) übertragen wird, **dadurch gekennzeichnet, dass** zur Übertragung von Daten während der Telegrammpausen zumindest ein erstes und ein zweites eine Pause kodierendes Symbol - erstes und zweites Pausensymbol (40,42) - übertragen wird und dass aus einer Folge von Pausensymbolen (40,42) eine Information abgeleitet wird.

2. Verfahren nach Anspruch 1, wobei jedem Pausensymbol (38, 40,42) ein Statuswert zugewiesen ist und wobei sich die Information aus der Folge der resultierenden Statuswerte ergibt.

3. Verfahren nach Anspruch 1, wobei einem Übergang zwischen einem Pausensymbol (38,40,42) und einem anderen Pausensymbol (38,40,42), insbesondere einem Übergang zwischen dem ersten und dem zweiten Pausensymbol (40,42) und dem zweiten und dem ersten Pausensymbol (42,40), jeweils ein Statuswert zugewiesen ist und wobei sich die Information aus der Folge der resultierenden Statuswerte ergibt.

4. Verfahren nach einem der Ansprüche 1 bis 3, wobei die Umsetzung eines Symbols (34) in ein Datum (36) auf Basis einer 4B/5B Kodierung erfolgt.

5. Verfahren nach einem der Ansprüche 1 bis 3, wobei die Umsetzung eines Symbols (34) in ein Datum (36) auf Basis einer 8B/10B Kodierung erfolgt.

6. Automatisierungsgerät als Teilnehmer in einem Kommunikationssystem zumindest zweier über eine serielle Verbindung (22) kommunikativ verbundener Automatisierungsgeräte (12-18, 24-28) mit Mitteln zur Ausführung des Verfahrens nach einem der Ansprüche 1 bis 5, nämlich Mitteln zum Übertragen zumindest eines ersten und zweiten Pausensymbols (40,42) während Telegrammpausen und Mittel zum Ableiten einer Information aus einer Folge von Pausensymbolen (40,42).

7. Automatisierungsgerät nach Anspruch 6 mit einem Schnittstellenbaustein (46,48) als Mittel zur Ausführung des Verfahrens nach einem der Ansprüche 1 bis 5.

8. Computerprogramm mit durch einen Computer ausführbaren Programmcodeanweisungen zur Implementierung des Verfahrens nach einem der Ansprüche 1 bis 5 wenn das Computerprogramm auf einem Automatisierungsgerät (12-18, 24-28) ausgeführt wird.

9. Automatisierungsgerät nach Anspruch 6, auf dem ein Computerprogramm nach Anspruch 8 geladen ist.

10. Speichermedium mit einem durch einen Computer ausführbaren Computerprogramm gemäß Anspruch 8.
